# FASCICULE DE BREVET EUROPEEN

(11) **EP 0 924 980 B1**
(45) Date de publication et mention de la délivrance du brevet: **09.10.2002**
(21) Numéro de dépôt: 97931870.6
(22) Date de dépôt: 04.07.1997
(51) Int. Cl.: A01G 5/04

(54) **PROCEDE DE REALISATION D'UNE COMPOSITION FLORALE A PARTIR D'UN NOYAU RIGIDE ET NOYAU AINSI UTILISE**
VERFAHREN ZUR HERSTELLUNG EINES GESTECKES AUS EINEM HARTEN KERN UND DAFÜR VERWENDETER KERN
METHOD FOR MAKING A FLORAL COMPOSITION ON A RIGID CORE AND CORE USED

(30) Priorité: 04.07.1996 FR 9608454
(43) Date de publication de la demande: 30.06.1999
(73) Titulaire: Chereau, Bruno, 21290 Recey sur Ource (FR)
(72) Inventeur: Chereau, Bruno, 21290 Recey sur Ource (FR)
(74) Mandataire: Bruder, Michel
(86) Numéro de dépôt international: FR9701203
(87) Numéro de publication internationale: WO98001019

(56) Documents cités:
- EP-A- 0 384 133
- FR-A- 2 513 849
- GB-A- 352 718
- GB-A- 2 147 205
- US-A- 5 477 637

## Description

La présente invention concerne un procédé de réalisation d'une composition florale selon le préambule de la revendication 1, et plus particulièrement d'un bouquet comportant des végétaux et/ou des éléments de décoration en s'appuyant sur les surfaces d'un support volumique rigide appelé noyau. L'invention a également pour but de décrire des noyaux selon le préambale de la revendication 6 particulièrement adaptés pour la mise en oeuvre de ce procédé.

On sait que traditionnellement la réalisation d'un bouquet de fleurs est effectuée par la concentration et la juxtaposition successive de végétaux et/ou d'éléments de décoration dans la main du professionnel par un mouvement de rotation des végétaux depuis le centre de la composition florale vers l'extérieur de celle-ci ; on comprend bien que cette technique nécessite un tour de main particulier qui exclue par conséquent l'intervention d'un personnel non qualifié. Compte tenu de cette façon de procéder, le bouquet traditionnel est de surcroît très communément de forme circulaire.

Cette technique traditionnelle requiert en outre un volume de végétaux qui est en rapport équivalent avec le volume final du bouquet souhaité, et la réalisation d'un bouquet floral traditionnel nécessite une préparation importante et une bonne connaissance des moyens et des végétaux nécessaire à son exécution ; on sait par exemple que les végétaux ou les éléments de décoration utilisés doivent de préférence avoir des longueurs similaires ou à défaut être tuteurés. D'un autre côté, dès le début de la réalisation, le professionnel doit gérer à tout instant non seulement les techniques d'assemblage artistique mais aussi l'évolution des formes et volumes que l'on veut finalement atteindre.

Le bouquet floral traditionnel est une unité homogène et par conséquent les éléments de la composition sont donc chronologiquement et mécaniquement interdépendants les uns des autres ; ce principe général est contraignant dans la mesure où il ne permet pas la réversibilité d'exécution ; en effet, si le professionnel décide de substituer un élément de décoration placé au coeur du bouquet ou plus généralement en amont du cheminement de l'exécution, il est pratiquement obligé de démanteler la réalisation jusqu'au niveau qu'il souhaite modifier.

C'est pourquoi l'exécution parfaite de composition florale traditionnelle nécessite une grande dextérité et un savoir-faire qui naturellement font défaut à l'amateur non expérimenté.

Pour palier à toutes ces contraintes et aux inconvénients précités, il est proposé conformément à l'invention un procédé de réalisation d'une composition florale et plus particulièrement d'un bouquet comportant des végétaux et/ou des éléments de décoration, utilisant un support volumique rigide, appelé noyau, formé par au moins une surface supérieure et une paroi externe latérale ou jupe s'étendant vers le bas à partir de la périphérie de la surface supérieure déterminant avec ladite surface la forme et le volume du noyau remarquable en ce que :
- on utilise la paroi latérale du noyau comme vecteur de forme du bouquet apte à donner les lignes directrices du volume externe de la composition florale et de manière indépendante,
- on utilise la surface supérieure du noyau pour disposer les végétaux et/ou les éléments de décoration qui constituent le coeur c'est-à-dire le centre visible du bouquet,
et ce, de telle manière que la surface supérieure et la jupe ainsi utilisées rendent le noyau totalement invisible.

La conception et la réalisation de bouquets floraux s'articulent ainsi sur un volume géométrique de base qui sert de support à l'exécution du bouquet ; naturellement, ce support détermine les lignes directrices de la réalisation à exécuter, du moins dans sa forme générale externe.

On connaissait déjà par le brevet GB-2.147.205 des systèmes permettant des réalisations florales comportant un support plein cylindrique et perforé sur le dessus et sur la surface latérale pour positionner et maintenir les tiges des végétaux par enfoncement dans des trous avantageusement repérés, toutefois, ce dispositif ne permet pas de réaliser des bouquets tels que définis précédemment, c'est-à-dire un agencement externe de végétaux sur tige, disposés côte à côte tout autour de la surface latérale, puisque les tiges sont ici enfoncées transversalement dans le support.

Naturellement, le noyau conforme à l'invention peut être de forme et de volume géométrique quelconque, ce qui offre la possibilité de réaliser tant au plan technique qu'artistique des compositions florales de formes inhabituelles et originales. Selon l'invention, les différentes surfaces du noyau jouant des rôles distincts, vont précisément permettre cette grande diversité de création. A cet effet, la surface supérieure du noyau contribue à composer la partie interne et haute de la réalisation, pour obtenir ce qui traditionnellement forme le centre ou le coeur d'un bouquet floral. La surface latérale sera, quant à elle, utilisée pour donner les lignes directrices du volume externe de la composition florale ; en ce sens, la ou les surfaces latérales constituent bien les vecteurs de la forme générale du bouquet.

D'autres caractéristiques et avantages ressortiront mieux encore de la description qui va être faite du procédé de réalisation d'une composition florale utilisant un noyau rigide, donnée à titre d'exemple non limitatif de l'invention en référence aux dessins annexés sur lesquels :
- les figures 1 à 6 représentent de manière schématique les étapes principales du procédé de l'invention,
- la figure 7 montre en perspective un bouquet conforme à l'invention selon une forme "diabolo" très classique
- les figures 8 représentent en perspective quelques exemples typiques de noyaux utilisables pour mettre en oeuvre le procédé de l'invention.

Une composition florale 1 est généralement constituée de végétaux décoratifs 2 ou d'éléments de décoration venant avantageusement se mêler auxdits végétaux 2 ; ces derniers comportent normalement une tête décorative 3 par exemple des épis de blé ou des fleurs, montés sur des tiges 4 dont la longueur peut nettement varier suivant les végétaux utilisés.

On sait en effet qu'on peut disposer de différents végétaux par exemple des végétaux multi-fleurs ou dispersés sur une hampe qui ne présentent que des tiges très courtes difficilement utilisables dans la composition florale. Bien entendu, des végétaux tels que les épis de blé ou l'avoine ou encore des fleurs sur tige peuvent présenter des longueurs de tiges relativement longues qui seront comme on le verra plus loin plus particulièrement destinées à l'enveloppe externe de la composition florale.

Conformément à l'invention et à partir de tels végétaux 2 complétés avantageusement par des éléments de décoration montés généralement sur des supports, utilisables de la même manière que les tiges 4, il va être décrit ci-après la succession des étapes caractérisant le procédé de réalisation de l'invention en utilisant pour cela un noyau 5 dont la forme et les caractéristiques générales seront détaillées plus loin.

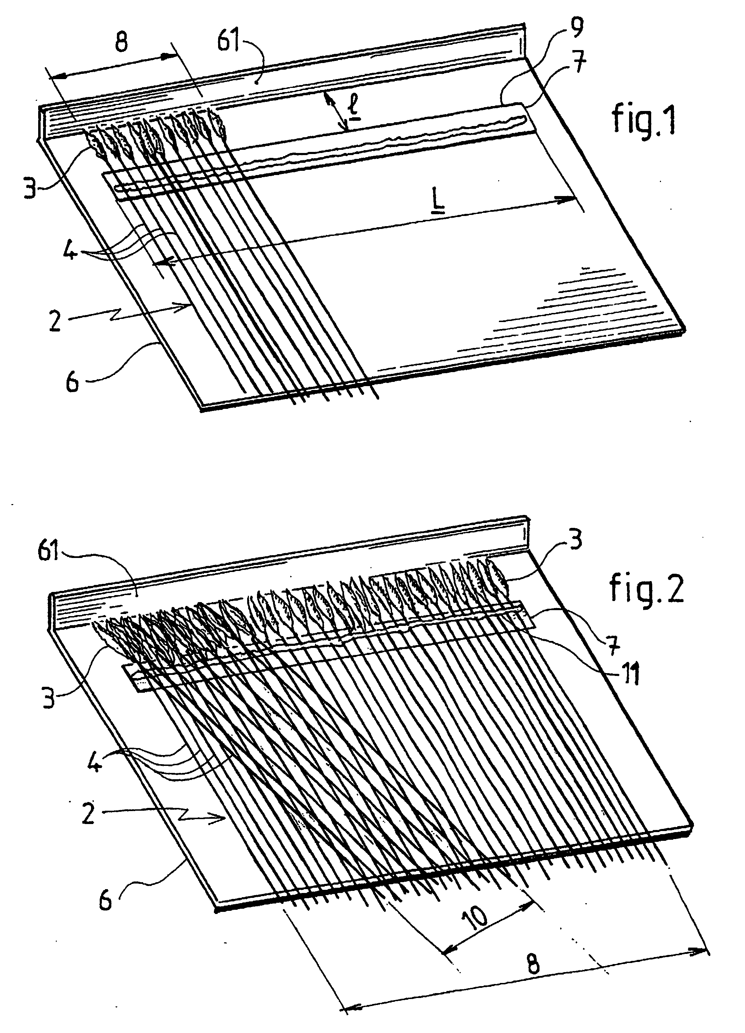

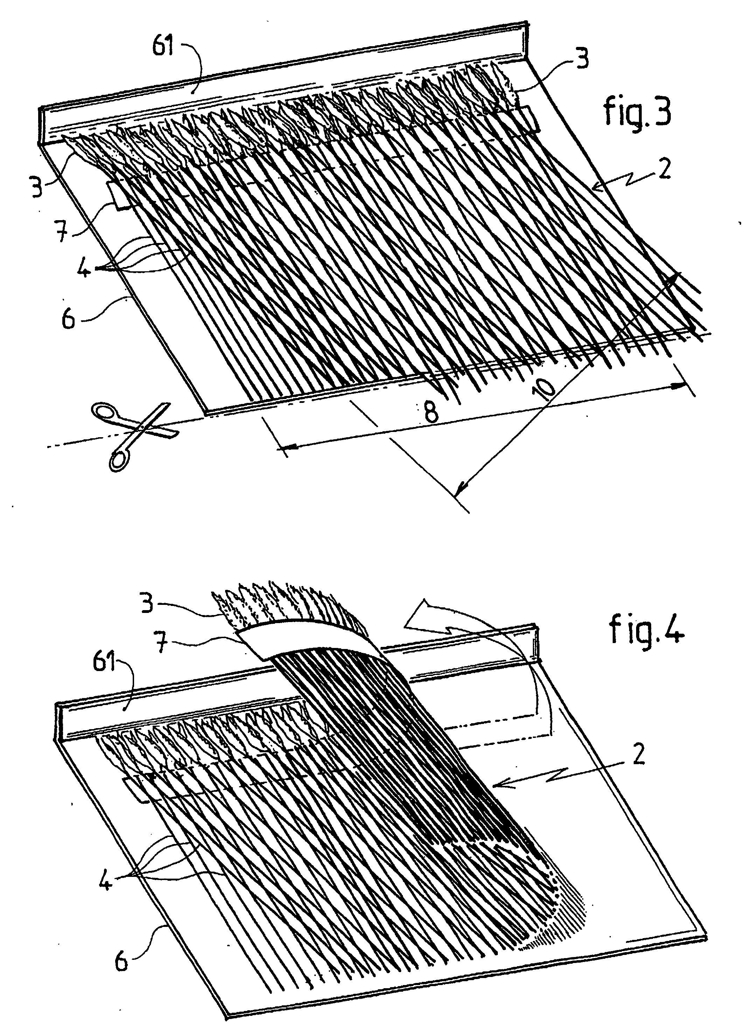

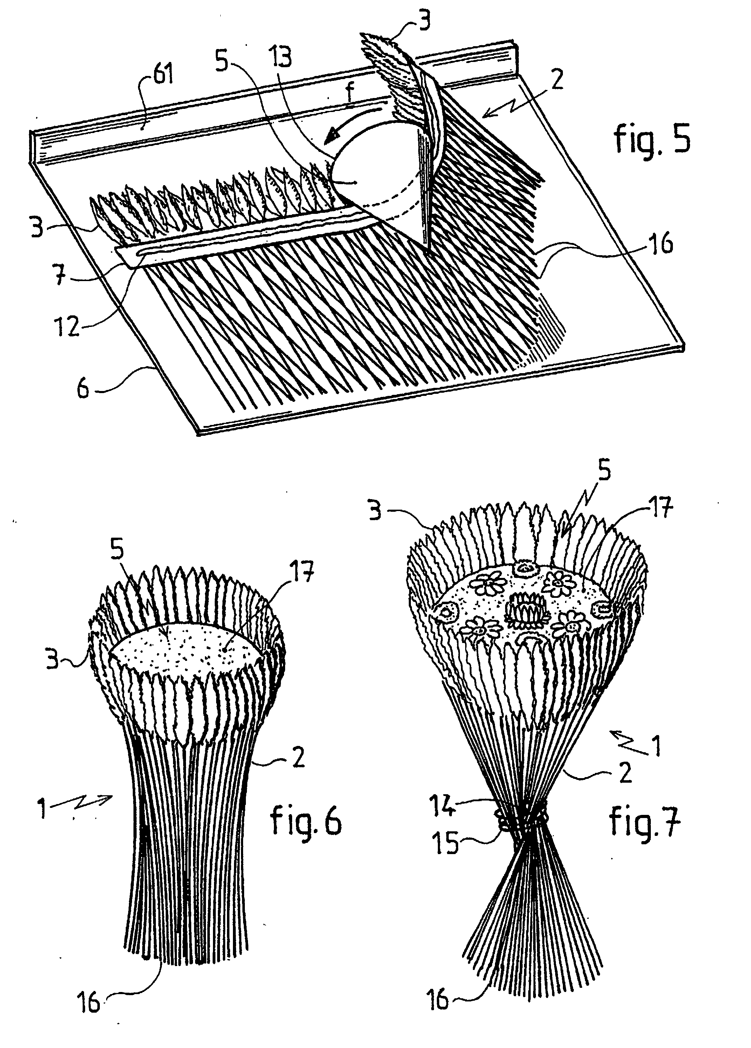

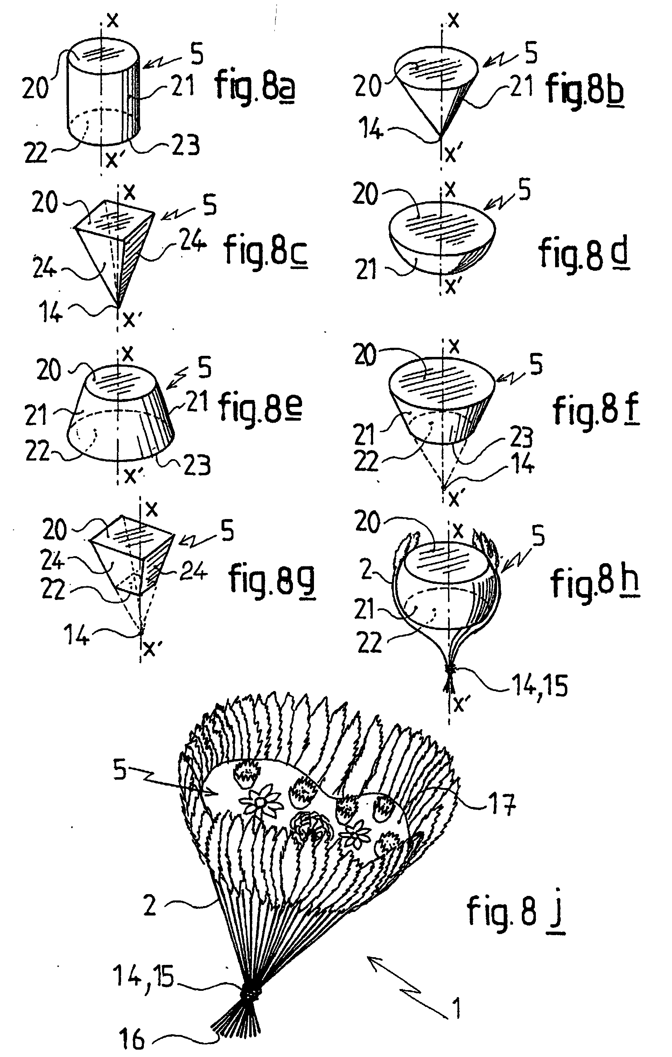

Conformément aux figures 1 à 7, le procédé de réalisation d'une composition florale et plus particulièrement d'un bouquet 1 met en oeuvre les étapes principales suivantes :
a) sur un plan de travail 6 (figure 1) on colle par son côté adhésif, un ruban adhésif 7, rectiligne et de longueur au moins égale au périmètre supérieur L du noyau 5 entourant ce qui deviendra à terme le coeur du bouquet 1,
b) au moyen d'une colle spéciale végétaux, de préférence, - bien que d'autres colles puissent convenir -, on solidarise sur le ruban 7 un premier rang 8 de végétaux 2 et/ou d'éléments de décoration que l'on vient disposer au mieux les uns contre les autres, parallèlement à eux-mêmes, selon une direction perpendiculaire à celle du ruban 7 sur une longueur L égale au périmètre supérieur du noyau 5 ; bien entendu, les têtes 3 des végétaux 2 et/ou des éléments de décoration sont maintenus de préférence à une même distance l du bord supérieur 9 du ruban 7 afin de créer ultérieurement une collerette harmonieuse du bouquet final ;
c) selon une variante particulièrement avantageuse, bien que cette étape ne soit pas toujours nécessaire, on vient coller par-dessus du premier rang 8 et en utilisant les mêmes moyens notamment de collage, un deuxième rang 10 de végétaux 2 avantageusement différents des végétaux du premier rang 8 ainsi que le cas échéant d'autres éléments de décoration ; les végétaux 2 et les éléments de décoration sont alors disposés comme dans l'étape précédente les uns contre les autres, parallèlement à eux-mêmes, mais selon une direction avantageusement oblique par rapport à celle du ruban 7 comme représenté partiellement sur la figure 2 ; les têtes 3 des végétaux 2 et/ou des éléments de décoration sont maintenus comme précédemment de préférence à même distance du bord 9 du ruban 7. Il sera avantageusement utilisé un plan de travail 6 comportant un dosseret 61 perpendiculaire au plan de travail sur lequel viennent en butée toutes les têtes 3 des végétaux 2 ou des éléments de décoration comme représenté à la figure 2.
   Il va de soi que le collage du deuxième rang 10 s'effectue par un nouvel apport de colle appropriée, suivant un filet 11 directement appliqué sur le premier rang de végétaux 8 déjà en place, et bien entendu en quantité suffisante pour solidariser efficacement le deuxième rang 10 ou le rang précédent 8.
d) Si nécessaire, en raison par exemple d'une densité insuffisante de végétaux 2 pour recouvrir ultérieurement les faces latérales du noyau 5, on peut compléter par un troisième rang, (non représenté sur les figures), venant se superposer exactement sur le deuxième rang 10 pour obtenir une décoration plus dense et en tout cas plus homogène, bien qu'il soit toujours envisageable de donner à ce troisième rang, - et pourquoi pas à un quatrième, voire un cinquième, etc ..., une obliquité différente des rangs précédents pour créer un effet décoratif supplémentaire dans le bouquet final. Il va de soi ici encore que le collage est effectué de la même manière par un trait de colle rapporté sur le rang précédent.
e) Conformément à la figure 3 montrant une exécution comportant deux rangs de végétaux, un premier rang 8 à tiges perpendiculaires au ruban 7, et un deuxième rang 10 à tiges obliques, et après avoir laissé sécher suffisamment les différents traits de colle 11 afin d'obtenir un ensemble relativement solidaire, on procède alors à une première égalisation des longueurs de tiges 4 donnant dans l'étape suivante une stabilité suffisante du bouquet 1.
f) Comme indiqué en figure 4, on décolle alors du plan de travail 6 le ruban 7 ainsi décoré ; l'ensemble est avantageusement retourné sur ledit plan 6 de telle manière que le côté adhésif dudit ruban se trouve maintenant vers le haut, à la vue de l'exécutant.
g) En référence à la figure 5, on amène le noyau 5 choisi pour la forme finale que l'on veut donner au bouquet 1 au contact du ruban adhésif 7 sur lequel on aura avantageusement déposé un trait de colle 12 pour renforcer les capacités d'adhérence du ruban 7 au moment ou l'on fera pivoter le noyau 5 suivant la flèche f de la figure 5 depuis l'extrémité droite du plan, pour le recouvrir totalement en prenant soin de bien faire correspondre le bord supérieur 9 du ruban avec le haut 13 du noyau 5.
h) Lorsque la forme du noyau 5 l'autorise, c'est-à-dire lorsque les génératrices de sa surface latérale présentent un point de convergence 14 vers le bas du noyau, on regroupe alors les tiges 4 vers la base du noyau 5 en essayant autant que possible, de conserver l'inclinaison des tiges 4 des végétaux 2 correspondant au deuxième rang 10 et éventuellement rangs supplémentaires. On ligature ensuite les tiges 4 en leur point de convergence 14 avec de la ficelle 15 ou équivalent (figure 7).
i) A ce stade, il reste à égaliser l'extrémité 16 des tiges 4 qui se sont naturellement évasées au moment de la ligature 15. Bien entendu, il est à ce stade là, possible de raccourcir l'extrémité 16 aux dimensions souhaitées par l'exécutant.
j) Conformément à la figure 7 on décore enfin la surface supérieure du noyau 5 de toutes manières adéquates pour former traditionnellement le coeur 17 du bouquet 1.

Selon une caractéristique particulièrement avantageuse et importante de l'invention, les éléments servant à la décoration du coeur 17 du bouquet 1 peuvent être choisis sans nécessairement tenir compte de la longueur de leur tige 4. En effet, il n'est ici nécessaire que d'un minimum de tige 4 pour être piquée dans la partie supérieure du noyau 5 réalisée en un matériau souple comme il sera dit plus loin. Il est clair que ce principe permet d'économiser sur les végétaux utilisés qui peuvent être des végétaux multi-fleurs ou dispersés sur une hampe que l'on pourra disséquer pour optimiser les ressources quantitatives et décoratives en végétal voire en élément de décoration.

Selon encore un autre avantage inattendu de l'invention, l'absence de tiges 4 à l'intérieur du bouquet 1 objet de l'invention permet d'augmenter la rigidité de la réalisation florale ; en effet, la présence d'un noyau rigide 5 au centre de la réalisation offre à l'ensemble une densité homogène et constante tout à fait à même d'absorber des chocs mécaniques sans déformation beaucoup plus importants que ce que peut normalement supporter un bouquet traditionnel.

Enfin, il va de soi qu'une fois terminée, la composition florale par la mise en oeuvre du procédé conforme à l'invention, le noyau 5 sera totalement rendu invisible par les décorations successives effectuées, comme on l'a dit, sur toutes ses surfaces externes. Il s'agit ici d'une caractéristique tout à fait nouvelle de l'invention faisant disparaître le moyen par lequel le bouquet a été réalisé en le recouvrant totalement.

Il va de soi que le nombre de rangs de végétaux et/ou d'éléments de décoration constituant l'enveloppe externe du bouquet 1, dépend essentiellement de la qualité, de la taille, de la forme et de la nature des produits utilisés rendant ou non nécessaire l'empilage de rangs successifs voire un serrage différent des produits entre-eux constituant chaque rang.

Selon un autre objet de l'invention et en référence à la figure 8 des dessins, il sera maintenant décrit un certain nombre de variantes de noyaux 5 utilisables dans le procédé qui vient d'être donné.

Le noyau 5 pour la réalisation de compositions florales mettant en oeuvre le procédé conforme à l'invention, comporte au moins une partie supérieure 20 apte à recevoir et maintenir en position les végétaux 2 dont la longueur de tige 4 est quelconque ou encore des supports d'éléments de décoration formant avec les végétaux 2 le coeur 17 du bouquet 1 ; venant entourer la partie supérieure 20 du noyau, une jupe latérale 21 de surface normalement et globalement continue et fermée sur elle-même délimite avec la partie supérieure 20 un volume. Conformément à l'invention, le noyau 5 est remarquable en ce que la surface externe de la jupe latérale 21 est continue et apte à diriger les tiges des végétaux disposés côte à côte sur cette surface externe tout autour de la jupe, de telle manière que lesdites tiges se rencontrent en un point de convergence 14 coïncidant avec la partie inférieure 22 dudit volume ou situé à proximité de cette-ci, selon que ladite partie 22 présente respectivement un sommet ou qu'elle est tronquée ouverte ou fermée éventuellement par un couvercle rapporté 23.

Conformément à une description assez banale du noyau 5 représentée sur la figure 8a, celui-ci a une forme générale cylindrique, c'est-à-dire qu'il est composé d'une partie supérieure 20 qui sera explicité plus loin, d'une jupe latérale 21 de forme cylindrique et d'un couvercle de fermeture 23 de même dimension que la partie supérieure 20 ; selon cette variante, le bouquet floral aura une forme générale finale différente de la figure 7 en ce que le noyau ne présentant aucun point de convergence 14 servira à l'élaboration de bouquets purement cylindriques. Il va de soi que de tels bouquets pourront néanmoins présenter quelques fantaisies en raison de la forme de leur noyau 5 : c'est le cas par exemple d'une jupe latérale 21 de forme globalement cylindrique autour de l'axe de résolution X,X' mais qui serait constituée de facettes 24, planes, bombées ou en creux disposées parallèlement les unes aux autres dans la même direction que l'axe X,X'. On comprend bien que de tels noyaux 5 puissent alors procurer des formes de bouquets d'allure tout à fait originale.

Selon une première variante du noyau conforme à l'invention présentant un axe de symétrie X,X' représenté sur la figure 8b, le noyau 5 est ici composé comme précédemment d'une partie supérieure 20 qui sera décrite plus longuement après et d'une jupe verticale 21 en forme générale de cône, présentant une zone sommitale coïncidant avec le point de convergence 14. Ce type de noyau utilisé à titre d'exemple dans le procédé, procure notamment des bouquets 1 conformes à la représentation de la figure 7. Selon la variante c de la figure 8, on peut également imaginer pour le noyau 5 une structure prismatique de révolution autour d'un axe X,X' comportant par exemple une base carrée formant la partie supérieure 20 du noyau 5 et des facettes triangulaires 24, au nombre de quatre, se réunissant en un sommet coïncidant avec le point de convergence 14 comme dans la variante conique de la figure 8b.

De même et conformément à la variante d de la figure 8, on peut imaginer un noyau 5 de forme hémisphérique comportant par conséquent une partie circulaire formant la partie supérieure 20 du noyau 5 et une jupe latérale 21 constituée par une calotte sphérique.

Il va de soi que toute autre exécution à partir des formes générales proposées au-dessus entrerait dans le champ de la protection et plus spécialement pour tous les noyaux ayant les formes précédentes mais tronquées. Par exemple sur la figure 8e il s'agit d'une variante de noyau tronconique évasé sur le bas, en 8f la même variante mais resserrée vers le bas ; la représentation 8g est une variante prismatique tronquée par le bas, enfin la variante 8h est une variante à jupe latérale 21 de forme torique ou sphérique tronquée, telle qu'une calotte sphérique associée à une partie supérieure circulaire pour former le coeur 17 du bouquet. Naturellement, les variantes f, g, h qui ne comportent aucun sommet en partie inférieure détermine néanmoins une zone de convergence où la ligature 15 d'un bouquet pourra être effectuée comme il a été dit.

Enfin, et suivant une dernière variante du noyau 5 conforme à l'invention, celui-ci peut être obtenu suivant une forme quelconque de la partie supérieure 20 et sur laquelle vient s'appuyer latéralement une forme quelconque de la jupe latérale 21 pouvant néanmoins déterminer un point de convergence ou un sommet 14 avantageusement utilisé pour faire comme il a été dit une ligature 15 des tiges 4 de végétaux 2 procurant à l'ensemble une forme tout à fait inconnue à ce jour.

Selon une autre caractéristique de l'invention, et quelle que soit la forme du noyau 5 utilisé, la partie supérieure 20 dudit noyau 5 est normalement constituée d'un matériau souple tel que mousse synthétique par exemple ou tout autre produit connu pour ses qualités mécaniques de maintient des végétaux 2 positionnés par simple piquage. Bien entendu, le matériau souple doit être d'abord compatible avec les végétaux 2 et/ou les éléments de décoration choisis et susceptible d'être associé en périphérie, avec la jupe latérale 21 à laquelle il est solidarisé par tous moyens connus comme par exemple collage, agrafage, soudage ou procédé analogue ; ladite jupe 21 dont la première qualité est d'être suffisamment rigide pour supporter l'enveloppe générale du bouquet, est avantageusement obtenue dans des matériaux tels que carton, plastique, argile, terre cuite, métal, verre, bois, ou matériau composite et leurs dérivés, compatibles avec les végétaux 2 et les colles utilisées pour les solidariser sur sa ou ses face(s) extérieure(s).

Selon enfin, une dernière caractéristique essentielle du procédé dans le cas où celui-ci est utilisé avec un noyau 5 à facettes 24, c'est-à-dire un noyau 5 dont la surface supérieure 20 s'inscrit dans un polygone de préférence régulier, on utilisera les premières étapes du procédé de réalisation a),b),c),d),e),f), pour garnir indépendamment chaque facette 24 du noyau 5, chaque ensemble étant alors appliqué sur le ruban 7 selon les prescriptions de l'étape g) puis on finit en procédant selon les étapes h), i), et j) du procédé général.

Le procédé est particulièrement applicable à la réalisation de bouquets industriels, c'est-à-dire répétitif, aussi bien qu'à la réalisation unitaire ou artisanale de compositions florales originales.

## Revendications

1. Procédé de réalisation d'une composition florale et plus particulièrement d'un bouquet (1) comportant des végétaux (2) et/ou des éléments de décoration, utilisant un support volumique rigide, appelé noyau (5), formé par au moins une surface supérieure (20) et une paroi externe ou jupe latérale (21) s'étendant vers le bas à partir de la périphérie de la surface supérieure (20) déterminant avec ladite surface la forme et le volume du noyau (5) **caractérisé en ce que** :
- la jupe latérale (21) du noyau (5) est utilisée comme vecteur de forme du bouquet (1) procurant les lignes directrices du volume externe de la composition florale en l'entourant avec des végétaux (2) pour former l'enveloppe externe du bouquet final,
- on dispose des végétaux (2) et/ou des éléments de décoration sur la surface supérieure (20) du noyau (5) pour constituer le coeur (17) c'est-à-dire le centre visible du bouquet (1),
et ce, de telle manière que la surface supérieure (20) et la jupe latérale (21) ainsi couvertes, rendent le noyau (5) totalement invisible.

2. Procédé de réalisation d'une composition florale (1) selon la revendication 1 **caractérisé en ce que** l'on met en oeuvre les étapes suivantes :
a) sur un plan de travail (6), on colle par son côté adhésif un ruban adhésif (7) rectiligne de longueur au moins égale au périmètre supérieur (L) du noyau (5) puis,
b) au moyen de colle spéciale végétaux de préférence, on solidarise sur le ruban (7) un premier rang (8) de végétaux (2) et/ou d'éléments de décoration disposés les uns contre les autres, parallèlement à eux-mêmes et selon une direction perpendiculaire à celle du ruban (7), sur une longueur (L) égale au périmètre supérieur du noyau (5), les têtes (3) des végétaux (2) et/ou des éléments de décoration étant maintenues de préférence à une même distance (l) d'un bord supérieur (9) du ruban (7) et,
c) le cas échéant, on colle au dessus du premier rang (8) et en utilisant les mêmes moyens, un deuxième rang (10) de végétaux (2) avantageusement différents et/ou des éléments de décoration disposés les uns contre les autres, parallèlement à eux-mêmes et selon une direction avantageusement oblique à celle du ruban (7), les têtes (3) des végétaux (2) ou des éléments de décoration étant maintenues de préférence à même distance d'un bord (9) du ruban (7),
d) on colle ensuite, le cas échéant ou si nécessaire, un troisième, voire des rangs supplémentaires par dessus le deuxième rang (10) pour obtenir une décoration supplémentaire ou plus dense ou plus homogène, et
e) après séchage complet de la colle, on procède à une première égalisation de la longueur des tiges (4) des végétaux (2) permettant d'obtenir une stabilité du bouquet (1), puis
f) on décolle le ruban (7) ainsi décoré du plan de travail (6) et l'ensemble est avantageusement retourné sur le même plan (6), le côté adhésif du ruban (7) vers le haut, puis
g) on fait pivoter (f) le noyau (5) mis en appui sur le ruban adhésif (7), en faisant correspondre le haut (9) du ruban (7) avec le haut (13) du noyau (5) depuis une extrémité du ruban (7) jusqu'à ce que le noyau (5) soit totalement enveloppé, puis
h) on regroupe les tiges (4) à la base du noyau (5) lorsque celui-ci présente un point de convergence (14) en partie basse en conservant l'inclinaison des tiges (4) des végétaux (2) du deuxième rang (10) et rangs suivants éventuels, et on les ligature avec de la ficelle (15) ou équivalent, puis
i) on égalise l'extrémité (16) des tiges (2) et on les raccourcie le cas échéant, enfin
j) on décore la surface supérieure (20) pour former le coeur (17) du bouquet (1).

3. Procédé selon la revendication 2 utilisant un noyau (5) à facettes (24) dont la surface supérieure (20) s'inscrit dans un polygone de préférence régulier, **caractérisé en ce qu'**on utilise les étapes de réalisation a, b, c, d, e et f, pour garnir indépendamment chaque facette (24) du noyau (5) selon l'étape g, puis on procède normalement selon h, i, et j.

4. Procédé selon l'une quelconque des revendications 2 ou 3 **caractérisé en ce qu'**on ajoute des traits (11) de colle spéciale végétaux sur la partie adhésive du ruban (7) avant son transfert sur le noyau (étape g).

5. Procédé selon l'une quelconque des revendications précédentes **caractérisé en ce que** les végétaux (2) ou les éléments de décoration placés sur la surface supérieure (20) ont des tiges (4) ou des supports réduits rendant utilisables les végétaux multi-fleurs ou dispersés sur une hampe et procurant à l'ensemble une densité constante et homogène.

6. Noyau (5) pour la réalisation d'une composition florale (1) telle qu'un bouquet réalisé suivant la revendication 1 comportant au moins une partie supérieure (20) apte à recevoir et maintenir en position des végétaux (2) dont la longueur de tige (4) ou des supports de décoration est quelconque, et, venant entourer ladite partie supérieure (20), une jupe latérale (21) fermée sur elle-même pour délimiter avec la partie supérieure (20) un volume, **caractérisé en ce que** la surface externe de la jupe latérale (21) est continue et apte à diriger les tiges des végétaux disposés côte à côte sur cette surface externe tout autour de la jupe, de telle manière que lesdites tiges se rencontrent en un point de convergence (14) coïncidant avec la partie inférieure (22) dudit volume ou situé à proximité de celle-ci, selon que ladite partie (22) présente respectivement un sommet ou qu'elle est tronquée ouverte ou fermée éventuellement par un couvercle rapporté (23).

7. Noyau selon la revendication précédente notamment pour la réalisation de bouquet suivant la revendication 3 **caractérisé en ce qu'**il présente un axe de symétrie (X,X') passant par le centre de la partie supérieure (20) et perpendiculairement à celle-ci, la jupe latérale (21) étant de révolution ou à facettes (24), planes, creuses, ou bombées, la forme générale du noyau (5) pouvant être conique ou prismatique, tronconique ou prismatique tronquée, voire torique ou sphérique tronquée, telle qu'une calotte sphérique.

8. Noyau selon la revendication 6 **caractérisé en ce que** la partie supérieure (20), la jupe (21) qui lui est associée et le couvercle (23) éventuel, sont de forme quelconque.

9. Noyau selon l'une quelconque des revendications 6 à 8 **caractérisé en ce que** la partie supérieure (20) est constituée d'un matériau souple, compatible avec les végétaux (2) et/ou les éléments de décoration, telle que mousse synthétique par exemple, permettant de piquer les végétaux (2) et la jupe (21) est en un matériau rigide tel que carton, plastique, argile, terre cuite, métal, verre, bois ou composite et leurs dérivés compatible avec la partie supérieure (20) à laquelle elle est solidarisée par tous moyens connus, tel que collage, agrafage, soudage ou analogue.

## Claims

1. Method for making a floral composition and more particularly a bouquet (1) comprising plants (2) and/or decorative elements, using a rigid volume frame, called a core (5) formed by at least an upper surface (20) and an external lateral wall or skirt (21) extending downwards from the periphery of the upper surface (20) defining with said surface the form and volume of the core (5), **characterised in that**:
- the lateral skirt (21) of the core (5) is used as vector for shaping the bouquet (1) providing the directrix of the external volume of the floral composition by surrounding it with the plants (2) to form the external envelope of the final bouquet,
- plants (2) and/or decorative elements (20) are arranged on the upper surface (20) of the core (5) to constitute the heart (17) that is to say the visible centre of the bouquet (1),
in such a way that the upper surface (20) and the lateral skirt (21), thus covered, completely hide the core (5) from view.

2. Method for making a floral composition (1) according to claim 1, **characterised in that** the following steps are implemented:
a) a linear adhesive tape (7) is glued by its adhesive side on a working surface (6), of length at least equal to the upper perimeter L of the core (5) then,
b) preferably using a special vegetal glue, a first row (8) of plants (2) and/or decorative elements are fixed on the tape (7), arranged next to each other and parallel to each other and in a direction perpendicular to that of the tape (7), along a length L equal to the upper perimeter of the core (5), the heads (3) of the plants (2) and/or decorative elements preferably being maintained at a same distance (1) from an upper edge (9) of the tape (7) and,
c) if appropriate, above the first row (8) and using the same means, one glues a second row (10) of plants (2), advantageously different, and/or decorative elements, arranged next to each other and parallel to each other and in a direction advantageously oblique to that of the tape (7), the heads (3) of the plants (2) and/or decorative elements preferably being maintained at the same distance from an edge (9) of the tape (7), and
d) next one glues, if appropriate or if necessary, a third or more supplementary rows above the second row (10) to obtain a supplementary decoration more dense or more homogeneous, and
e) after the glue has dried completely, one proceeds with a first equalisation of the length of the stems (4) of the plants (2), making it possible to obtain stability of the bouquet (1), and
f) the tape (7) thus decorated is unstuck from the working surface (6) and the whole complex is advantageously turned over on the same surface (6), with the adhesive side of the tape (7) upwards, then
g) one pivots (f) the core (5) pressed on the adhesive tape (7), making the top (9) of the tape (7) correspond with the top (13) of the core (5) starting from one end of the tape (7) until the core (5) is totally covered, then
h) one regroups the stems (4) at the base of the core (5) when the latter has a convergent point (14) at the lower part, preserving the inclination of the stems (4) of the plants (2) of the second row (10) and possible following rows, and they are fastened with string (15) or equivalent, then
i) one equalises the ends (16) of the stems (2) and shortens them if need be, and finally
j) one decorates the upper surface (20) to form the heart (17) of the bouquet (1).

3. Method according to claim 2 using a core (5) with facets (24) with an upper surface (20) in the shape of a polygon, preferably regular, **characterised in that** one uses the above steps a, b, c, d, e and f, garnishing each facet (24) of the core (5) independently according to step g, and then proceeding normally according to h, i and j.

4. Method according to either one or the other of claims 2 and 3, **characterised in that** one adds lines (12) of special vegetal glue on the adhesive part of the tape (7) before its transfer onto the core (step g).

5. Method according to any one of the above claims, **characterised in that** the plants (2) and/or decorative elements placed on the upper surface (20) have shortened stems (4) or supports making it possible to use plants with multi-flowers or dispersed on a floral stalk, giving the whole complex a constant and homogeneous density.

6. Core (5) for producing a floral composition (1) such as a bouquet made according to claim 1, comprising at least an upper part (20) able to receive and maintain plants (2) in position, with any length of stems (4) or decorative supports and, surrounding said upper part (20), a lateral skirt (21) closed on itself to define a volume with the upper part (20), **characterised in that** the external surface of the lateral skirt (21) is continuous and suitable for directing the stems of the plants arranged side by side on this external surface all around the skirt, in such a way that said stems meet each other at a convergent point (14) coinciding with the lower part (22) of said volume or located close to it, depending on whether said part (22) has a summit or whether it is truncated open or closed, possibly by an added cover (23).

7. Core according to the preceding claim, in particular for making a bouquet according to claim 3, **characterised in that** it has an axis of symmetry (X,X') passing through the centre of the upper part (20) and perpendicular to it, the lateral skirt (21) being rounded or with facets (24), plane, recessed or bulging, the general shape of the core (5) being able to be conic or prismatic, tapered or truncated prismatic, and even toric or truncated spherical, such as a spherical cup.

8. Core according to claim 6, **characterised in that** the upper part (20), the skirt (21) associated with it and the possible cover (23), are of any shape whatsoever.

9. Core according to any one of claims 6 to 8, **characterised in that** the upper part (20) is constituted of a flexible material, compatible with plants (2) and/or decorative elements, such as synthetic mousse, for example, allowing the plants (2) to be stuck in, and **in that** the skirt (21) is made of a rigid material such as cardboard, plastic, clay, terra-cotta, metal, glass, wood or composite and their derivates compatible with the upper part (20) to which it is connected by all known means, such as gluing, stapling, soldering or similar.

## Patentansprüche

1. Herstellungsverfahren einer Blumenkomposition und insbesondere eines Blumenbouquets (1) bestehend aus Pflanzen (2) und/oder Dekorationselementen, unter Verwendung eines "Kern" (5) genannten festen dichten Untergrundes, gebildet aus mindestens einer oberen Oberfläche (20) und einer äußeren Wand oder Seitenverkleidung (21), die sich von dem Umkreis der oberen Oberfläche (21) nach unten erstreckt und der sogenannten Oberfläche die Form und das Volumen des Kerns (5) ausmacht, **dadurch gekennzeichnet, dass**:
die Seitenverkleidung (21) des Kerns (5) als Formvektor des Blumenbouquets (1) verwendet wird, welcher die Leitlinien des äußeren Raumes der Blumenkomposition schafft, indem er sie mit den Pflanzen (2) umgibt, um so die äußere Ummantelung des fertigen Blumenbouquets zu bilden.
man über Pflanzen (2) und/oder Dekorationselemente auf der oberen Oberfläche (20) des Kerns (5) verfügt, um das Herz zu bilden (17), d.h. das sichtbare Zentrum des Blumenbouquets (1),
und dies alles in der Art und Weise, dass die so bedeckte obere Oberfläche (20) sowie die so bedeckte Seitenverkleidung (21) den Kern (5) vollkommen unsichtbar machen.

2. Herstellungsverfahren einer Blumenkomposition (1) gemäß Anspruch 1, **dadurch gekennzeichnet, dass** man die folgenden Schritte durchführt:
auf einer Arbeitsfläche (6) klebt man mit seiner klebenden Seite ein Klebeband (7) geradlinig in einer Länge auf, die mindestens dem oberen Umfang (L) des Kerns (5) entspricht, und dann
steckt man vorzugsweise mit einem speziellen Pflanzenklebstoff auf dem Band (7) eine erste Reihe Pflanzen (2) und/oder Dekorationselemente gegenüberliegend und parallel zueinander und in einer senkrecht zum Klebeband liegenden Richtung zusammen, und zwar auf einer Länge (L), die dem oberen Umfang des Kerns (5) entspricht, wobei die Köpfe (3) der Pflanzen (2) und/oder der Dekorationselemente vorzugsweise in ein- und demselben Abstand (1) eines oberen Randes (9) des Bandes (7) zu halten sind, und
dann klebt man gegebenenfalls über der ersten Reihe (8) und unter Anwendung der gleichen Mittel eine zweite Reihe (10) von Pflanzen (2) auf, welche sich vorteilhaft voneinander bzw. von den gegenüberliegend angeordneten Dekorationselementen abheben, die parallel zueinander und in einer vorteilhaft schräg zum Band (7) liegenden Richtung angeordnet sind, wobei die Köpfe (3) der Pflanzen (2) bzw. der Dekorationselemente vorzugsweise in gleicher Entfernung zu einem Rand (9) des Klebebandes (7) gehalten werden.
danach klebt man gegebenenfalls oder erforderlichenfalls eine dritte oder sogar noch weitere Reihen über die zweite Reihe (10), um eine zusätzliche, entweder dichtere oder gleichmäßigere Dekoration zu erhalten, und
nach vollständiger Trocknung des Klebemittels nimmt man eine erste Angleichung der Länge der Stiele (L) der Pflanzen (2) vor, um eine Stabilität des Blumenbouquets (1) zu erhalten, und dann
zieht man das so dekorierte Klebeband (7) von der Arbeitsfläche ab und legt das Ganze dann auf die gleiche Arbeitsfläche (6) in vorteilhafter Weise zurück, wobei die klebende Seite des Bandes (7) nach oben zeigt, um dann
den auf dem Klebeband (7) abgestützten Kern (5) zu schwenken (f), indem man die Oberseite (9) des Bandes (7) vom einen Ende des Bandes (7) her mit der Oberseite (13) des Kerns (5) abstimmt, bis dass der Kern (5) vollständig ummantelt ist,
woraufhin man die Stiele (4) auf der Grundlage des Kerns (5) dann umschichtet, wenn dieser im unteren Teil einen Konvergenzpunkt aufweist, wobei man die Biegung der Stiele (4) der Pflanzen (2) der zweiten Reihe (10) sowie die eventuellen nachfolgenden Reihen beibehält und sie mit der Schnur (15) oder Gleichwertigem zusammenbindet, dann
ordnet man die Enden (16) der Stiele (2) gleichmäßig an und kürzt sie gegebenenfalls, und schließlich
dekoriert man die obere Oberfläche (20), um das Herz (17) des Bouquets zu bilden.

3. Verfahren gemäß Anspruch 2, unter Verwendung eines Kerns (5) mit Facetten (24), dessen obere Oberfläche (20) sich in ein vorzugsweise regelmäßiges Vieleck einlässt, **dadurch gekennzeichnet, dass** man die Herstellungsschritte a, b, c, d, e und f anwendet, um jede Facette (24) des Kerns (5) unabhängig voneinander gemäß Schritt g zu dekorieren, um dann normal mit den Schritten h, i und j weiterzumachen.

4. Verfahren gemäß irgendeinem der Ansprüche 2 und 3, **dadurch gekennzeichnet, dass** man Striche (11) von speziellem Pflanzenklebemittel auf die klebende Seite des Bandes (7) hinzufügt, bevor man es auf den Kern überträgt (Schritt g).

5. Verfahren gemäß einem der vorgenannten Ansprüche, **dadurch gekennzeichnet, dass** die Pflanzen (2) bzw. die auf der oberen Oberfläche (2) angeordneten Dekorationselemente Stiele (4) bzw. verkleinerte Grundlagen haben, welche die mit mehreren Blüten versehenen bzw. auf einem Schaft verteilten Pflanzen brauchbar machen und der gesamten Anordnung eine konstante und homogene Dichte gewähren.

6. (5) für die Herstellung einer Blumenkomposition (1) wie ein gemäß Anspruch 1 hergestelltes Blumenbouquet mit mindestens einer oberen Oberfläche (20), die geeignet ist zur Aufnahme sowie Beibehaltung der Position der Pflanzen (2), deren Länge der Stiele (4) bzw. der Dekorationsuntergründe beliebig ist, sowie einer Seitenverkleidung (21), welche den genannten oberen Teil (20) umgibt und welche in sich geschlossen ist, um mit dem oberen Teil (2) einen Raum abzugrenzen, **dadurch gekennzeichnet, dass** sich die äußere Oberfläche der Seitenverkleidung (21) fortsetzt und geeignet ist, die auf dieser äußeren Oberfläche nebeneinander angeordneten Pflanzenstiele um die Verkleidung herum auszurichten, und zwar so, dass die genannten Stiele sich in einem Konvergenzpunkt (14) treffen, um sich mit dem unteren Teil (22) des genannten Raumes zu decken oder neben diesem anzuordnen, wonach der genannte Teil (22) jeweils eine Spitze aufweist oder offen abgeschnitten ist oder eventuell durch einen aufgesteckten Deckel (23) verschlossen ist.

7. Kern gemäß vorgenanntem Anspruch, insbesondere für die Herstellung des Blumenbouquets gemäß Anspruch 3, **dadurch gekennzeichnet, dass** es eine Symmetrieachse (X, X') aufweist, welche durch den Mittelteil des oberen Teiles (20) und senkrecht hierzu stehend läuft, wobei die Seitenverkleidung (21) entweder umlaufend oder mit flachen, hohlen oder gewölbten Facetten (24) versehen ist, wobei die allgemeine Form des Kerns (5) kegelförmig oder prismenförmig, kegelstumpfartig oder abgestumpft prismatisch, oder sogar wulstförmig oder abgeschnitten kugelförmig wie z.B. eine Kugelkappe sein kann.

8. Kern gemäß Anspruch 6, **dadurch gekennzeichnet, dass** der obere Teil (20), die damit zusammenhängende Verkleidung (21) sowie der eventuelle Deckel (23) irgendeine beliebige Form haben.

9. Kern gemäß einem der Ansprüche 6 bis 8, **dadurch gekennzeichnet, dass** der obere Teil (2) aus einem weichen Material besteht, welches sich mit den Pflanzen (2) und/oder den Dekorationselementen verträgt, wie z.B. geschäumter Kunststoff, in welchen man die Pflanzen (2) hineinstecken kann, und eine Verkleidung (21), die aus einem festen Material besteht wie z.B. Karton, Kunststoff, Ton, Terrakotta, Metall, Glas, Holz oder Verbundwerkstoff und deren Derivate, die mit dem oberen Teil (20) verträglich sind, an welchen sie durch sämtliche bekannten Mittel wie z.B. Kleben, Heften, Schwenken oder Ähnlichem angebunden ist.
